(19) **Europäisches Patentamt European Patent Office Office européen des brevets**

(11) **EP 3 791 085 B1**

(12) **EUROPÄISCHE PATENTSCHRIFT**

(45) Veröffentlichungstag und Bekanntmachung des Hinweises auf die Patenterteilung:
**09.03.2022  Patentblatt 2022/10**

(21) Anmeldenummer: **19724399.1**

(22) Anmeldetag: **09.05.2019**

(51) Internationale Patentklassifikation (IPC):
***F16D 65/092*** (2006.01)

(52) Gemeinsame Patentklassifikation (CPC):
**F16D 65/092;** F16D 2055/007; F16D 2065/026

(86) Internationale Anmeldenummer:
**PCT/EP2019/061974**

(87) Internationale Veröffentlichungsnummer:
**WO 2019/215299 (14.11.2019 Gazette 2019/46)**

(54) **DREHRICHTUNGSABHÄNGIG KONFEKTIONIERTER SCHEIBENBREMSBELAG FÜR EINE FESTSATTELSCHEIBENBREMSE**

BRAKE PAD BACKPLATE FOR A SADDLE BRAKE TAILORED IN DEPENDENCE ON THE TURNING DIRECTION

PLÂTE DE SUPPORT DE SEMELLE DE FREIN À DISQUE CONFECTIONÉE EN DÉPENDANCE DE LA DIRECTION DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2018  DE 102018207269**

(43) Veröffentlichungstag der Anmeldung:
**17.03.2021  Patentblatt 2021/11**

(73) Patentinhaber: **Continental Teves AG & Co. OHG 60488 Frankfurt am Main (DE)**

(72) Erfinder:
• **DREHER, Herbert 60488 Frankfurt am Main (DE)**

• **GOLZ, Dietrich 60488 Frankfurt am Main (DE)**
• **ZIMNOCH, Frederic 60488 Frankfurt am Main (DE)**

(74) Vertreter: **Continental Corporation c/o Continental Teves AG & Co. OHG Intellectual Property Guerickestraße 7 60488 Frankfurt a. Main (DE)**

(56) Entgegenhaltungen:
**WO-A1-2005/064188          DE-A1- 19 626 296 DE-A1-102014 223 649     DE-A1-102016 209 069**

**Beschreibung**

Die Erfindung bezieht sich auf einen drehrichtungsabhängig konfektionierten, asymmetrisch verbesserten Scheibenbremsbelag in Rückenplattenkonfiguration für eine Festsattel-Teilbelag-Kraftfahrzeugscheibenbremse sowie auf eine bevorzugte paarweise Verwendung derselben Scheibenbremsbeläge in einem entsprechend adaptiert ausgelegten Festsattelscheibenbremssystem, wobei zwecks drehfester Reibbelaghalterung und zur parallelverschieblichen Reibbelagführung, in dem passend abgestimmt konfigurierten Festsattelbremsgehäuse zwei jeweils zueinander, sowie jeweils zu einer Raddrehachse, parallel gerichtet arrangierte Bolzen aufgenommen sind, und wobei diese Bolzen zwecks Kraft- bzw. Momentenstütze und/oder Führung entsprechend der Raumfreiheitsgrade zweckgerichtet mit dieser Reibbelagrückenplatte kooperieren.

Aus der WO 2005/064188 A1 ist eine Hochleistungsfestsattelbremse bekannt, die im Grundsatz für Vorwärtsfahrt sowie für Rückwärtsfahrt gleichhoch belastbar ist. Der Reibbelag ist zu einer Reibbelagmittelachse symmetrisch konfektioniert sowie mit Ω-förmiger Struktur gestaltet. Bezogen auf eine Reibbelagmittelachse liegt im Festsattelbremsgehäuse eine quasiredundante, symmetrisch konstruierte Reibbelaglagerung + Reibbelagbolzenführung anhand von zwei identisch ausgelegten Bolzenlagern vor. Die beiden Bolzenlager sind in Radialrichtung auf einheitlichem, identischem Niveau platziert, und radial unterhalb eines theoretischen Reibkraftangriffspunktes arrangiert, der etwa mit einem radial ausgerichteten Höhenniveau einer Bremskolbenachse fluchtet. Dabei ist der Kraftfluss einer Haltekrafteinleitung in das Festsattelbremsgehäuse - also die Bremsumfangskraftübertragung - über diejenige Bohrungswandung der gelochten Rückenplatte am jeweils einlaufseitig arrangierten Bolzen gelöst. Die Kippmoment- bzw. Drehmomentabstützung wird über die beiden Bolzen geleistet. Infolge Bremsung nach einem Raddrehrichtungswechsel erfolgt daher stets ein Anlagewechsel in Bezug auf die Einleitung der Bremsumfangskräfte, so dass keinerlei Festlager vorliegt. Im Wechsel ermöglicht der jeweils andere Bolzen eine Drehsperre, damit der Reibbelag nicht außer Eingriff geschwenkt wird. Diese Reibbelaglagerung- und Führung umfasst zwei stets spiegelbildlich arrangierte Ösen/Aufnahmeöffnungen in einer Reibbelagrückenplatte. Die Abstimmung dieser Reibbelaglagerung ist so, dass Umfangskräfte jeweils am einlaufseitigen Bolzen abgetragen werden, mit der Folge, dass der Lastwechsel im Kraftfluss mit einem Bolzenwechsel verbunden ist. Geräuschfreies Lastwechselverhalten erfordert eine entsprechend hochpräzise, ergo strenge Maßtolerierung in Bezug auf die Reibbelaglagerung sowie Führung über die beiden Bolzenlager; eine besondere Präzision in Bezug auf die im Kraftfluss einbezogenen Komponenten, wie insbesondere exakt passend eingefügte Bolzen und Ösen als Bolzenaufnahmelöcher in den zugedachten Rückenplatten. Eine Folge dieser feinmechanischen Abstimmung ist entsprechende Kostenlast. Andererseits goutiert der Radbremsmarkt prinzipiell symmetrisch ausgeformte Reibbelagrückenplattenkonfigurationen, weil diese grundsätzlich ästhetisch wirken, die Bremsenwartungsprozesse erleichtern können, und zudem eine rationelle, abfallreduzierte, Blechstreifenausnutzung gestatten.

Aufgabe der vorliegenden Erfindung ist demzufolge primär ein neuartiger Vorschlag über eine verbesserte Reibbelaglagerung für eine Festsattelkraftfahrzeugteilbelagscheibenbremse, unter Vermeidung der Probleme wie NVH und Klackgeräusche infolge Drehrichtungswechsel, und unter Vermeidung von hohen Komponentenkosten, sowie Vermeidung kostenintensiver Gehäusebearbeitung. Die vorliegende Erfindung wendet sich im Prinzip gegen einen vollsymmetrisch konfektionierten, drehrichtungsunabhängig gestalteten, Mainstream indem eine Lagerung unter Verzicht auf drehrichtungsunabhängige Redundanzen vorgelegt wird, indem vereinfacht zusammengefasst eine neuartige, und asymmetrisch gelagerte Reibelaghalterung sowie Reibbelagführung definiert ist, die eine drehrichtungsabhängig selektiv gebundene Rückenplattenkonfektionierung beinhaltet. Die Erfindung beruht demzufolge auf dem Grundsatz eines fest definierten Festlagers A in Verbindung mit einem besonders praxisgerechten Anforderungskollektiv, das auf der Grundannahme beruht, dass größte Bremsleistung WB stets in Richtung Vorwärts- also Vorzugsdrehrichtung V + erfordert ist, wohingegen eine Rückwärtsdrehrichtung V - im praxisgerechten Lastkollektiv einen reduzierten Bremsenergieeintrag WB verursacht. Die Erfindung beinhaltet weiterhin eine neuartige Reibbelagkonfiguration, wie insbesondere auch deren paarweise Reibbelagverwendung als verkaufsfähig zusammengestellter Verschleißteilersatz. Parallel dazu wird zudem ein Vorschlag vorgelegt, der das entsprechend neuartig konfigurierte Festsattelscheibenbremssystem als die zweckgerichtet passend abgerichtete Aufnahmekomponente für die Reibbelagkomponenten betrifft, und wobei ein erfindungsgemäßer Bremssystemzusammenbau gemeinsam mit der Offenbarung der vorliegenden Erfindung gleichermaßen beansprucht und dokumentiert ist.

Erfindungsgemäß umfasst ein drehrichtungsabhängig konfektionierter Scheibenbremsbelag 1 eine Rückenplatte 2 als Träger für einen Reibwerkstoff 3, zwecks Kooperation mit einer drehbaren Bremsscheibe 4 die von einem fahrzeugfesten Festsattelscheibenbremsgehäuse übergriffen ist, und wobei die Rückenplatte 2 aus einem streifenförmigen, ebenen Stahlblechwerkstoff, zu einer Reibbelagmittelachse Y asymmetrisch, ausgetrennt ist, der Reibwerkstoff 3 weitgehend zentral sowie mittelbar oder unmittelbar auf einer Frontseite 6 von der Rückenplatte 2 fixiert ist, und mit diametral zueinander gegenüberliegenden, reibwerkstofffrei gestalteten Lagerflanken 7,8 und wobei die Rückenplatte 2 in Relation zu der Reibbelagmittelachse Y asymmetrisch ausgeformt ist. Denn die Rückenplatte 2 besitzt an seiner, bezüglich Vorzugsdrehrichtung V+ einlaufseitig platzierten Lagerflanke 7, eine radial unterhalb zur Bremskolbenachse K versetzt platzierte fixe Bremskrafthalterung mit einem Loch 9, das zur Haltebolzenaufnahme dient. Demzufolge ist einerseits ein ortsfestes, fix platziertes, Reibbelagfestlager A definiert. Es ist dadurch erfindungsgemäß keinerlei Ortswechsel bzw. Bolzenwechsel zur Haltekraftübertragung definiert, selbst wenn sich die Lastrichtung durch Drehrichtungswechsel/Fahrzeugfahrtrichtungswechsel ändern sollte. Auslaufseitig ist an der Rückenplatte 2 eine Lagerflanke 8 allokiert, die mit Ihrem Führungsmittel/Drehmomentstütze/Verdrehsicherung in Bezug auf die Kolbenachse K nach radial auswärts querversetz arrangiert ist. Diese Führung liegt als randoffene Maulöffnung 10 mit Aufnahmetasche 11 zur Führungsbolzenaufnahme vor. Mit dieser Maßnahme ist auslaufseitig (bezogen auf die Vorzugsdrehrichtung V +) ein fix allokiertes Reibbelagloslager B definiert. Anhand ihrer erfindungsgemäß seitenweise fix verteilt arrangierten Halte- und Führungsfunktionalität ermöglicht die vorliegende Erfindung erstmals eine verblüffend einfache Komponentenherstellung + Maßtolerierung. Weiterhin wird auf nachteiligen Wechsel bzw. Unterbrechung im Kraftfluss infolge drehrichtungswechselnder Haltekraftabstützung verzichtet. Anders ausgedrückt definiert die vorliegende Erfindung eine statisch fix platzierte Festlager- und Loslagerkonfiguration, ohne Kraftflussunterbrechung.

Sowohl die funktionalen Zusammenhänge, als auch die konstruktiven Einzelheiten von ganz besonders bevorzugten Varianten, respektive bevorzugte Ausführungsformen der vorliegenden Erfindung, gehen aus der ausführlichen Beschreibung anhand der Zeichnung hervor. In diesem Zusammenhang verdeutlicht die Zeichnung in ihren einzelnen Figuren, teils illustrativ oder schematisch aufbereitet, in unterschiedlichstem Maßstab wechselweise vergrößert oder verkleinert, sowie in unterschiedlichsten Perspektiven bzw. Ausschnitten, teilweise in generalistischer Chartgestaltung:

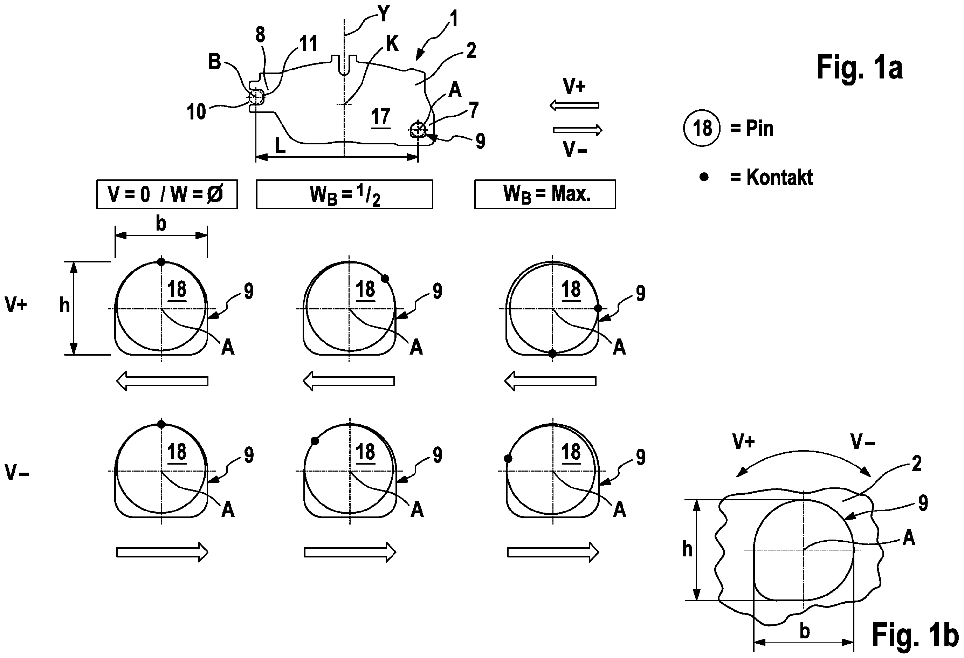

Fig. 1a zeigt Prinzipskizzen zwecks Verdeutlichung einer fix konfektionierten Halterung per Festlagerung A anhand eines selbsttätig verlagerbar ausgelegten Haltebolzenkontaktes ● in einem fest zugewiesenen Loch 9 einer Rückenplatte 2 für verschiedene, unterschiedlich wechselhafte Bremsbetriebsbedingungen, am Beispiel einer bevorzugten Ausgestaltung eines erfindungsgemäß drehrichtungsabhängig ausgelegten Festsattelreibbelages 1;

Fig. 1b zweigt eine alternative Festlagervariante umfassend eine dreiviertelkreisbogenförmige Rundbogenlochvariante;

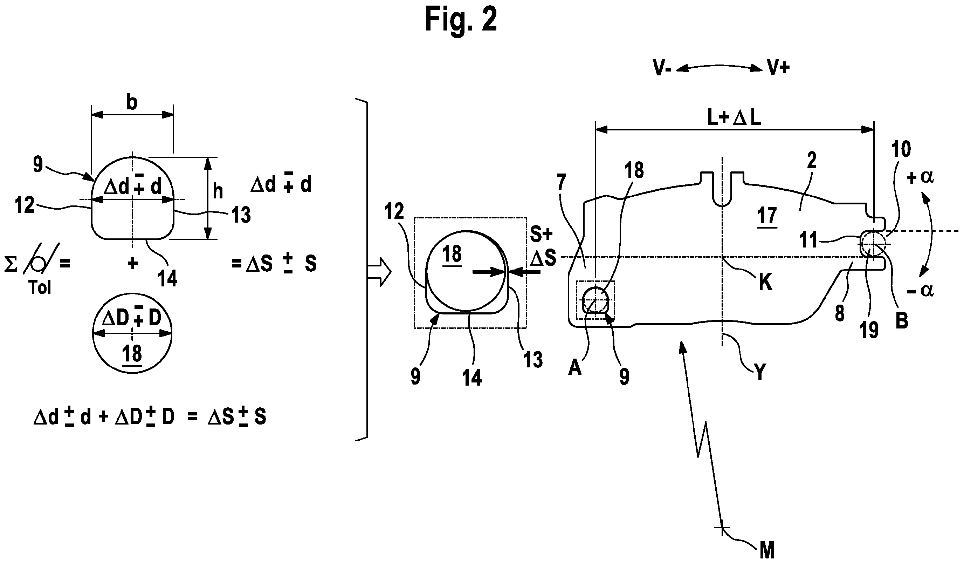

Fig. 2 Prinzipskizze betreffend die Form-, Lage und Maßtolerierungssituation, am Beispiel einer bevorzugten Ausgestaltung eines erfindungsgemäß drehrichtungsabhängig aufgenommenen Festsattelreibbelages 1, mit fix alloziertem Festlager A umfassend einen kreisquerschnittförmigen Haltebolzen 18 und ein halbreisbogenförmig konfiguriertes Rundbogenloch/Öse 9 die mit Versatz radial unterhalb einer Kolbenlängsachse K vorliegen, sowie mit einem Loslager B für einen kreisquerschnittförmigen Führungsbolzen 19, der weitgehend radial oberhalb der Kolbenachse K versetzt ist;

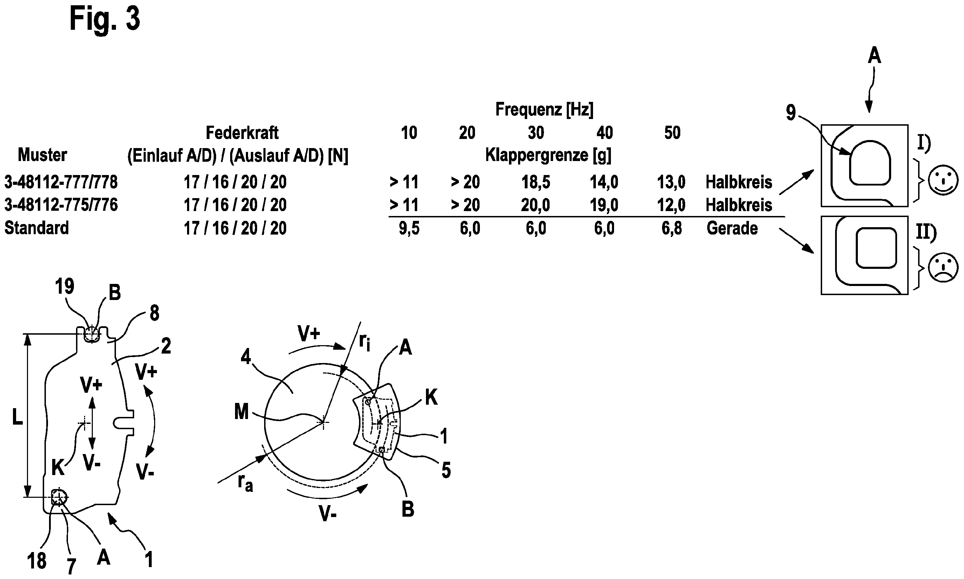

Fig. 3 Prinzipschaubild mit Gegenüberstellung verschiedener Messergebnisse über Geräuschereignisse in Verbindung mit grundlegendem System-/Prüfstandaufbau und der verantwortlichen Reibbelaggestaltungsvariation, wobei eine vorbekannte Standardhalterung mit einer erfindungsgemäß bevorzugt gestalteten Rundbogenfestlagerung verglichen ist;

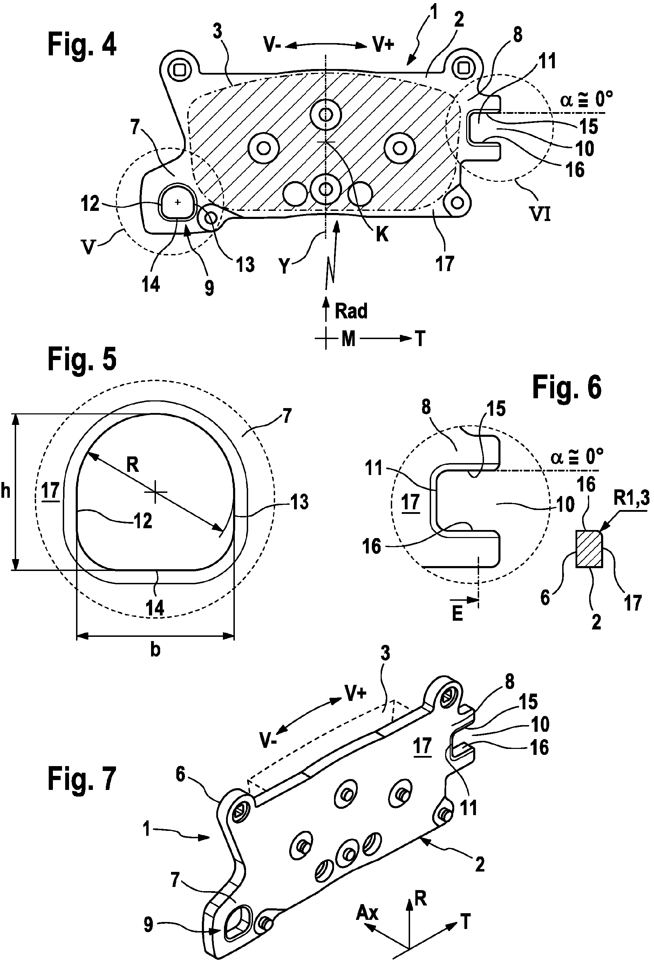

Fig. 4 Rückenplattenrückansicht einer ersten bevorzugten Reibelagvariante in verkleinertem Maßstab, mit Anstellwinkel α von etwa 0° im Bereich der Maulöffnung 10;

Fig. 5 die Einzelheit V aus Fig. 4 jedoch vergrößert, mit halbkreisbogenförmig ausgeprägtem Rundbogenloch/Öse/Fenster 9 zur Aufnahme eines kreisquerschnittförmigen Haltebolzens 18 in einer Reibbelagrückenplatte 2, zur Festlagerung A;

Fig. 6 die Einzelheit VI aus Fig. 4 jedoch vergrößert, mit einer randoffen ausgetrennten Aufnahmetasche 11 zur Aufnahme eines Führungsbolzens 19, zur Loslagerung B, und mit rückseitig aufgebrachtem Kantenradius R 1,3 (vgl. Schnitt E am rechten Seitenrand);

Fig. 7 Reibbelag 1 mit Verwendung der ersten Rückenplattenvariante nach der Fig. 4, jedoch perspektivisch;

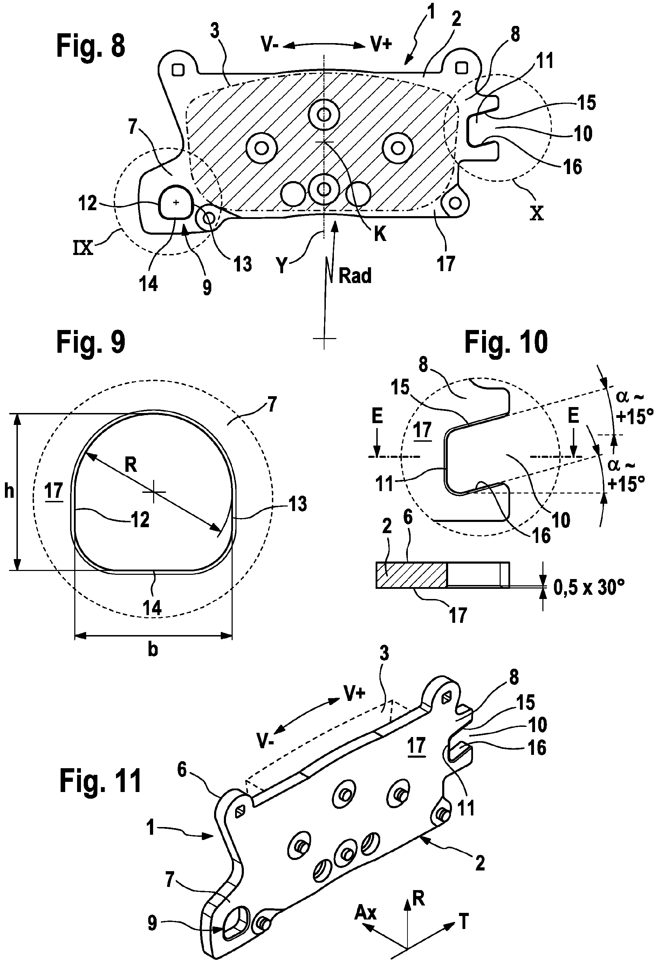

Fig. 8 Rückenplattenrückansicht einer zweiten bevorzugten Reibbelaggestaltungsvariante in verkleinertem Maßstab und mit Anstellwinkel von etwa α = 15° im Bereich der Maulöffnung 10;

Fig. 9 die Einzelheit IX aus Fig. 8 jedoch vergrößert, mit halbkreisbogenförmig ausgeprägtem Rundbogenloch/Öse/Fenster 9 zur Aufnahme eines Haltebolzens 18 in einer Reibbelagrückenplatte 2 als Festlagerung A;

Fig. 10 die Einzelheit X aus Fig. 8 jedoch vergrößert, mit einer randoffen ausgetrennten Aufnahmetasche 11 für einen Führungsbolzen 19, zwecks Loslagerung B, und mit rückseitig aufgebrachter Fase 0,5 x 30° (vgl. Teilschnitt E-E unterhalb der Fig. 10); und

Fig. 11 ein Reibbelag 1 unter Verwendung der zwei-

Nachstehend wird die Erfindung vorwiegend mit Schwerpunkt auf einige ermöglichte Reibbelagdesignvarianten erläutert, obwohl sämtliche angepassten und einbezogenen Komponenten bzw. Teile der Bremse in den Schutzumfang der Erfindung einbezogen sind.

Im Fokus steht die grundsätzlich neuartige, asymmetrisch ausgetrennte Reibbelagrückenplattengeometrie. Eine Rückenplatte 2 umfasst dazu ein fix allokiertes Festlager A das als randgeschlossene Durchgangsöffnung bzw. Loch oder Öse 9 in Gestaltung als Rundbogenfenster mit definierter Höhe h und mit definierter Breite b ausgetrennt ist. Das Loch 9 ist zur zweckgerechten Anlage an Haltebolzen 18 mit graduell kleinerem Kreisquerschnitt angepasst, indem oberhalb ein Rundbogen diametral gegenüberliegend (überwiegend in den Skizzen vertikal oben) zu einer gedachten Raddrehachse M/Bremsscheibendrehachse platziert ist.

In weiterhin präzisierter Ausgestaltung kann diese Rundbogenstruktur, nämlich Loch 9 im Sinne eines Langlochs auch verzerrt bzw. aus mehreren einfachen Kreisbogensegmenten und aus mehreren Gradenstücken zusammengesetzt sein. Eine zusammengestetzte Struktur aus anders geformten geometrischen Teilen bzw. Kurvensegmenten sind genauso denkbar. Jedenfalls verdeutlichen die Figuren mithin eine langlochartig gestreckte Lochstruktur deren Höhe h zumindest geringfügig größer als deren Breite b definiert ist und wobei die Höhe h parallel zur Reibbelagmittelachse Y bemessen ist. Im Ergebnis ist ein kreisquerschnittförmiger Haltebolzen 18 orthogonal zu seiner Haltekraftflussrichtung gerichtet, also quer mit geringfügigem Spiel in seiner Lochaufnahme aufnehmbar. Dadurch wird es beispielsweise vorteilhaft ermöglicht, dass zwischengelagerte Verschleiß- bzw. Korrosionsprodukte oder auch Schmutz infolge gegenseiter Relativverschiebung anhand dieser selbstreinigenden Betriebsauslegung selbsttätig abgetragen werden.

Das bevorzugt gebildete Rundbogenfenster verfügt im Wesentlichen über einen Halbkreisrundbogen, der mit einem vorgegeben definierten Nennradius zwei im Wesentlichen zueinander parallel ausgerichtete Fensterlaibungen 12, 13 derart überspannt, dass der Bogen jeweils ansatzlos in die zugehörigen Fensterlaibungen 12, 13 übergeht. Der doppelte Nennradius ist dabei zumindest geringfügig übermäßig so toleriert, so dass ein kreisquerschnittförmiger Haltebolzen 18 mit Übergangspassung bzw. mit geringem Spiel noch einfach montierbar in dem Loch 9 aufnehmbar ist. In einem unteren Teil des Lochs 9 sind die beiden Fensterlaibungen 12, 13 durch eine, im Wesentlichen eben ausgebildete, Fensterbasis 14 miteinander verbunden. Fensterbasis 14 und Halkreisrundbogen sind im Wesentlichen zueinander gegenüberliegend vorgesehen. Jede Fensterbasis 14 ist im Wesentlichen orthogonal, quer, also lotrecht zu deren Fensterleibungen 12,13 ausgerichtet. Es ist möglich, dass zwischen Fensterbasis 14 und Fensterlaibung 12,13 jeweils ein Viertelkreisrandbogen mit einem definierten Kreisradius eingefügt ist, so dass ein Eck vermieden wird, bzw. sich ein kreisquerschnittförmiger Haltebolzen günstig in die Lochstruktur einschmiegen kann. Dabei können die beteiligten Kreisradien jeweils unterschiedlich dimensioniert sein. Vorzugsweise ist der Kreisradius der Viertelkreisrandbögen im Wesentlichen geringer bemessen, als die Hälfte des Haltebolzendurchmessers. Festgehen bzw. Korrosionsschaden wird durch unterschiedliche Radien vorteilhafterweise vermieden. In weiterhin bevorzugter Ausgestaltung dieser bevorzugten Ausführungsform sind die beiden Viertelkreisrandbögen mit zueinander unterschiedlich bemessenen Radien, sowie zueinander gegenüberliegend ausgerichtet, ausgebildet. Dadurch wird eine besonders leistungsgerechte, zielführende gegenseitige Anpassung im Tragverhalten(Flächenpressungsreduktion) zwischen den gepaarten, gekrümmten Kontaktflächen ermöglicht. In weiterhin leistungsgerechter Spezifikation wird erfindungsgemäß zudem vorgeschlagen, dass ein einlaufseitig allokierter Viertelkreisrandbogen über einen größeren Radius verfügt, als ein auslaufseitig allokierter Viertelkreisrandbögen. Als unteres Grenzmaßdefinition empfiehlt es sich, dass die Radien der Viertelkreisrandbögen jeweils für sich genommen kleiner als der Radius des Halkreisrundbogens bemessen sind. Als obere Grenzmaßdefinition gilt demgegenüber, dass die Radien der beiden Viertelkreisrandbögen in Summe gerechnet inetwa mit dem Radius des überspannenden Halkreisrundbogens übereinstimmen sollen. Beispielsweise ist ein Radius eines Viertelkreisrandbogens im Vergleich zum Radius des Halbkreisrundbogens inetwa 20 % - 80 % kleiner bemessen.

Nachstehend wird vertieft auf Einzelheiten der Gestaltung des Loslagers B im Bereich der Lagerflanke 8 eingegangen. Grundsätzlich kann eine vergleichsweise einfach ausgeprägte Drehhemmung/Momentensperre anhand der Rückenplatte 2 ausreichen. Eine hier bevorzugte konstruktive Gestaltung umfasst eine randseitig offene Maulöffnung 10 mit Aufnahmetasche 11 und im Wesentlichen zueinander parallel ausgerichteten Maulflächen 15, 16 sowie mit einem bodenseitigen Freistich als Freigang für den Führungsbolzen 19. Anhand des Freistichs wird in diesem Zusammenhang sichergestellt, dass der Kraftfluss über den Führungsbolzen 19 frei von tangential gerichteten Haltekräften ist. Mit anderen Worten überträgt der Führungsbolzen 19 ausschließlich Querkräfte.

Also ist sichergestellt, dass der Führungsbolzen 19 von jeglicher Halteaufgabe freigestellt ist, und ausschließlich dazu dient, dass sich der Reibbelag 1 nicht unkontrolliert verdrehen kann.

Für eine integrale Aushebesicherung bietet es sich an, wenn die Maulflächen 15, 16 der Maulöffnung 10 ganz oder zumindest im Abschnitt der Führungsbolzenaufnahme weitgehend zueinander parallel ausgerichtet, sowie mit einem Anstellwinkel α zwischen etwa 0° - ± 45° definiert querversetzt vorgesehen sind. Versuche haben darüber hinaus ergeben, dass ein Anstellwinkel α = + 15° besonders günstige Ergebnisse ermöglichen kann.

Im Sinne eines verbesserten Verletzungsschutz darf weiterhin definiert sein, dass die umlaufenden, ausgetrennten Kanten der Rückenplatte 2, allseitig oder selektiv, und entweder bereits am Rückenplattenstanzrohteil oder zumindest jedoch am Reibbelagfertigteil vorzugsweise maschinell trovalisiert, abgeschliffen, gebrochen, definiert gefast oder abgerundet ausgebildet sind. Insbesondere sollte ein Rundbogenfenster bzw. die Maulöffnung 10 auf der Rückseite 17 der Rückenplatte 2 jeweils mit einer definierten Gestaltung versehen sein, entweder per umlaufend halbkreisförmig abgerundeter Kante mit Radius R, bzw. alternativ durch eine definiert angefaste Kante von mindestens etwa 0,5 x 30 °, oder wechselweise durch variiert ausgeprägte Mischformen dieser Varianten, damit eine verletzungsfreie Montierbarkeit sichergestellt ist.

Die Erfindung definiert schließlich einen drehrichtungsabhängig konfektionierten Festsattelscheibenbremsbelag 1 mit einer besonders verkürzten Toleranzkette die ausschließlich definiert ist durch Addition bzw. Substraktion von zwei Nennmaßen einschließlich deren oberem und unterem Abmaß im Bereich der unmittelbar festlagerseitig am A-Festlager beteiligten Maße, nämlich zwischen a) Haltebolzendurchmesser D (inclusive dessen jeweiliger Abmaßtoleranzen ΔD) und b) Bolzenaufnahmeöffnung d in der Rückenplatte 2 (inclusive deren jeweiliger Abmaßtoleranzen Δd), nach der Formel

$$\Delta d \pm d + \Delta D \pm D = \Delta S \pm S.$$

Dabei ist die Toleranzkette durch die einseitig fix allokierte Festlagerung zwischen Rückenplatte 2 und Haltebolzen 18 erfindungsgemäß verkürzt, und wobei der gegebene Bolzenabstandes L zwischen Haltebolzen 18 und Führungsbolzen 19 auf die Kraftflusseinleitung der Haltekräfte in das Festsattelgehäuse 5 keinen Einfluss hat.

In weiterhin vorteilhafter Ausgestaltung der Erfindung kann zwecks Vermeidung von Verwechslung definiert sein, dass das Loch 9 und die Maulöffnung 10 über wechselweise unterschiedliche oder identisch dimensionierte Durchmesser verfügen, und wobei die zugeordneten Haltebolzen 18 und Führungsbolzen 19 ihrerseits wechselweise angepasste, also identische oder unterschiedlich dimensionierte, Durchmesser aufweist, so dass ausschließlich eine korrekte gegenseitige Montagepaarung ermöglicht ist. Beispielsweise kann auf Grundlage von formschlüssigen Gesetzmäßigkeiten oder gegenseitig abgestimmten Passformen automatisch konstruktiv ausgeschlossen werden, dass der Führungsbolzen 19 irrtümlich mit dem Loch 9 gepaart wird, oder es kann auch vermieden werden, dass der Haltebolzen 19 irrtümlich mit der Maulöffnung 10 kombiniert wird.

In Draufsicht sind die Maßnahmen zur Halterung und zur Führung an der Rückenplatte 2 so arrangiert, dass diese jeweils lateral zueinander diametral beabstandet und in Relation zu einer Kolbenachse K radialversetzt platziert sind. Dieses Arrangement kann so umgesetzt sein, dass ein maximierter Radialversatz zwischen den unterschiedlichen Abstützpunkten vorliegt.

Die Erfindung bezieht sich weiterhin auf eine Festsattelscheibenbremse mit einem Bremssattelgehäuse 5 zur drehfesten Lagerung von wenigstens zwei, in Betätigungsrichtung parallel zueinander relativverschiebbar geführt gelagert angeordneten, sowie jeweils kolbenbetätigten Scheibenbremsbelägen 1, die beidseits zu einander parallel gerichteten Reibflächen einer rotierenden Bremsscheibe 4 arrangiert sind, indem die per Festlager A jeweils ortsfest definierte Bremskrafteinleitung in das Bremssattelgehäuse 5, und ein dazu ortsfest platziertes Reibbelagloslager B vorgesehen ist, und wobei im Übrigen wenigstens ein Reibbelag 1 vorliegt, der irgendeine Merkmalskombination nach einem oder mehreren der vorstehend im Detail beschriebenen Arrangements erfüllen kann.

Erfindungsgemäß bietet es sich insbesondere ganz besonders an, einen Scheibenbremsbelagersatzteilsatz als Montageset lose gebündelt, in einer Umverpackung konfektioniert vorzulegen, wobei als Teilbestandteil zwei im Wesentlichen spiegelsymmetrisch zueinander ausgeführte, drehrichtungsabhängig konfektionierte Scheibenbremsbeläge 1 vorliegen, die mindestens eines der vorstehenden Merkmale erfüllen, beziehungsweise alternativ oder in Kombination jegliche beliebige Kombination davon, und wobei dieses Montageset dazu geeignet und bestimmt ist, zur Neuherstellung, Instandsetzung und/oder Wartung, wie insbesondere zur Reparatur, einer vorstehend beschriebenen Festsattelkraftfahrzeugteilbelagscheibenbremse zu dienen.

In der hiermit vorgeschlagenen Lösung dieser Aufgabenstellung stellt die Rückenplatte 2 eine neuartige, zentrale und separat vorgefertigte Komponente eines Scheibenbremsbelags 1 dar. Die Rückenplatte 2 ist dabei aus einem streifenförmigen, ebenen Stahlblechwerkstoff ausgetrennt, und in Bezug auf eine Mittelachse Y mit asymmetrisch dazu allokierter Lagerung und Führung über Bolzen 18, 19 definiert vorgesehen. Die Reibbelagrückenplatte 2 ist bezüglich Ihrer eigenen Mittelachse Y asymmetrisch ausgetrennt, wie insbesondere fein- oder lasergeschnitten, und dient als Träger für eine weitegehend symmetrisch zur Mittelachse aufgebrachte, verfestigte Reibwerkstoffmischung 3 die weitgehend zentral sowie mittelbar oder unmittelbar auf der Frontseite 6 fixiert ist. Die Rückenplatte 2 verfügt zudem über diametral gegenüberliegend versetzte, reibwerkstofffreie, Lagerflanken 7,8 die asymmetrisch zueinander, ausgeprägte Vorsprünge ausbilden können. Die Einzelheiten und Details gehen aus der Beschreibung anhand der Zeichnung hervor.

Erfindungsgemäß erlaubt die Erfindung eine vorteilhafte Konzentration auf ein Festlager A indem vorgesehen wird, dass eine Bolzenaufnahmeöffnung zur Ausbildung eines Festlagers A im Belagträger (Rückenplatte) für den bremskraft-übertragenden Haltebolzen mit einer kreisbogenförmigen, wie insbesondere halbkreisförmigen Kontur im oberen Bereich ausgestattet ist. Als Sonderform ist eine Ausführung mit einer halbkreisförmigen Kontur oder auch mit einer Freiform-Kontur prinzipiell möglich.

Die Spielsituation und Toleranzrechung zwischen Rückenplatte und Haltebolzen ist erfindungsgemäß "verkürzt", weil diese ausschließlich beeinflusst ist durch die festlagerseitig am A-Festlager definierten Maße zwischen a) Haltebolzendurchmesser (inclusive der jeweiligen Toleranz) und b) Bolzenaufnahmeöffnung im Bremsbelagträger (inklusive der jeweiligen Toleranz). Dadurch ist eine vergröberte Tolerierung in einer Distanz/Beabstandung der Länge L zwischen Haltebolzen und Führungsbolzen ermöglicht. Mit anderen Worten ist eine Tolerierung im Abstand L zwischen Festlager A und Loslager B ohne besondere Rückwirkung auf die NVH-Resultate (Quietschgeräusche). Demzufolge ermöglicht eine vergröberte Tolerierung in der Länge L eine sehr vorteilhafte Auswirkung auf die Herstellkosten (Kostenreduktion). Thermisch bedingte Maßveränderungen haben auch keine funktionale Beeinträchtigung zur Folge. Erfindungsgemäß wird als prinzipielle Lösungsformel zur konstruktiven Reibbelaglagerung die folgende, verkürzt definierte, Toleranzkette definiert:

$$\Delta d \pm d + \Delta D \pm D = \Delta S \pm S$$

In Weiterbildung der Erfindung kann an der Bolzenaufnahme des A-Festlagers noch vorgesehen sein, dass an eine oben definierte bogenförmige bzw. alternativ halb-elliptische Kontur zusätzlich eine Krümmung im rechten, unteren Quadranten zwischen etwa 3-Uhr und 6-Uhr in die Aufnahme des Haltebolzens eingearbeitet ist. Die dadurch erzeugte "Schmiegung" ermöglichst einen allmählichen, geführten Übergang bei gradueller Änderung der Kraftrichtung und leistet dadurch einen Beitrag zur Vermeidung einer abrupten Änderung im jeweiligen Kontaktpunkt nach veränderten Bedingungen. Radialspiel ist also einfach reduziert auslegbar.

Eine Spielsituation zwischen Rückenplatte 2 und Belagführungsbolzen 19 wird erfindungsgemäß lediglich beeinflusst durch die Durchmesser-Toleranzrechnung bezogen auf das A-Lager (Festlager). Insbesondere ist ein Abstand L zwischen Haltebolzen 18 und Führungsbolzen 19 (also die Distanz zwischen A-Festlager und B-Loslager) für die Toleranzrechnung ohne Belang. Thermisch bedingte Maßveränderungen sind erfindungsgemäß auch ohne jeden Einfluss. Günstige Vorteile der Erfindung erwachsen dadurch, dass für NVH und Klackgeräuschvermeidung reduzierte Spielsituation durch geringere Kosten aufgrund entfeinerte Toleranz, reduzierte Maßhaltigkeit der Komponenten bzw. gröbere Bearbeitung des Gehäuses erzielt werden kann. Die neue Kontur erlaubt nach Drehrichtungswechsel eine eindeutige und unmittelbar Adaptierte Kontaktsituation am Festlager A zwischen einem einzigen Belaghaltebolzen und der zugeordneten Bolzenaufnahme in der Öffnung des Belagträgers an dem jeweils individuell gekennzeichneten Kontaktpunkt (in Abhängigkeit von der Bremsbelastung) für Vorwärts- und Rückwärtsfahrt bei kostengünstigerer Maßhaltigkeit. Keine Mehrpunktberührung im Belastungsbereich, der für die Geräuschentwicklung relevant ist. Kontinuierlicher Übergang des Kontaktpunktes bei Steigerung bzw. Reduzierung der Bremsbelastung und Fahrtrichtungswechsel. Diese kontinuierlichen Übergänge verbessern auch das Klappergeräuschverhalten bei Schlechtwegbetrieb.

Demzufolge wird anhand einer erfindungsgemäßen Rückenplatte 2 in besonders vereinfachter, ökonomischer wie auch in äußerst vorteilhaft-einschwenkmontierbarer Art und Weise eine statisch bestimmte und gleichzeitig komfortorientierte Lagerung zwischen Scheibenbremsbelag 1 und Kraftfahrzeugteilbelagscheibenbremse aufgezeigt.

Fehlmontage oder Verwechslung ist durch konstruktiv integrierte Codierung nach dem poka yoke Prinzip ausgeschlossen. Beispielsweise verfügt in einer Ausgestaltung das Loch 11 und die Maulöffnung 13 über unterschiedlich oder identisch dimensionierte Durchmesser, und wobei zugeordnete Haltebolzen 21 und Führungsbolzen 22 ihrerseits über angepasste und identisch oder unterschiedlich dimensionierte Durchmesser verfügen.

Bezugszeichenliste

| | |
|---|---|
| WB | Bremsenergie |
| V+ | Vorwärtsdrehrichtung (Vorzugsdrehrichtung) |
| V- | Rückwärtsdrehrichtung |
| A | Festlager |
| B | Loslager |
| L | Distanz |
| ΔL | Distanztoleranz |
| D | Haltebolzendurchmesser |
| ΔD | Haltebolzendurchmessertoleranz |
| d | Haltebolzenaufnahme |
| Δd | Haltebolzenaufnahmetoleranz |
| R | Nennradius |
| R X/r | Radius |
| S | Toleranz |
| ΔS | Toleranzabweichung |
| Rad | Radialrichtung |
| Ax | Axialrichtung |
| T | Tangentialrichtung |
| K | Kolbenachse |
| M | Rad-/(Bremsscheiben-)Drehachse |
| Y | Reibbelagmittelachse |

●     Kontaktpunkt
α     Anstellwinkel [°]
h     Höhe
b     Breite

1     (Kraftfahrzeug)Scheibenbremsbelag
2     Rückenplatte
3     Reibwerkstoff
4     Bremsscheibe
5     Festsattelscheibenbremsgehäuse
6     Frontseite
7     Lagerflanke
8     Lagerflanke
9     Loch/Öse
10    randoffene Maulöffnung
11    Aufnahmetasche
12    Fensterlaibung
13    Fensterlaibung
14    Fensterbasis/Schwelle
15    Maulfläche
16    Maulfläche
17    Rückseite
18    Trag- oder Haltebolzen
19    Drehmomentstütz- oder Führungsbolzen

**Patentansprüche**

1. Drehrichtungsabhängig konfektionierter Scheibenbremsbelag (1), mit einer Rückenplatte (2) als Träger für einen Reibwerkstoff (3), zwecks Kooperation mit einer drehbaren Bremsscheibe (4) die von einem drehfest gelagerten Festsattelscheibenbremsgehäuse (5) umgriffen ist, und den Scheibenbremsbelag (1) lagert, wobei die Rückenplatte (2) aus einem streifenförmigen, ebenen Stahlblechwerkstoff, in Relation zu einer Reibbelagmittelachse (Y) asymmetrisch

ausgetrennt ist, der Reibwerkstoff (3) weitgehend zentral sowie mittelbar oder unmittelbar auf einer Frontseite (6) von der Rückenplatte (2) fixiert ist, und mit distalen, sowie querverlagert versetzt arrangierten, reibwerkstofffrei gestalteten Lagerflanken (7,8), wobei die in Vorzugsdrehrichtung (V +) einlaufseitig platzierte Lagerflanke (7), in Relation zu einer Kolbenachse K nach radial innen querversetzt ist, und über eine Halterung mit einem Loch (9) zur Haltebolzenaufnahme verfügt, um ein fix platziertes Reibbelagfestlager A zu definieren, und dass die auslaufseitig platzierte, sowie nach radial außen querversetzt allokierte Lagerflanke (8) der Rückenplatte (2), mit einer Verdrehsicherung ausgestattet ist, die als randoffene Maulöffnung (10) mit Aufnahmetasche (11) als Führungsbolzenaufnahme ausgebildet ist, um ein fix platziertes Reibbelagloslager B zu definieren,

**dadurch gekennzeichnet, dass** das Loch (9) als ein Rundbogenfenster mit definierter Höhe h und mit definierter Breite h ausgebildet ist, und das Rundbogenfenster im Wesentlichen über einen Halbkreisrundbogen verfügt, der mit einem vorgegeben definierten Nennradius R zwei im Wesentlichen zueinander parallel sowie parallel zur Reibbelagmittelachse Y ausgerichtete Fensterlaibungen (12, 13) überspannt.

2. Drehrichtungsabhängig konfektionierter Scheibenbremsbelag (1) nach Anspruch 1, **dadurch gekennzeichnet, dass** zwecks Ausbildung einer parallel zur Reibbelagmittelachse Y ausgerichteten Langlochstruktur die Höhe h des Rundbogenfensters zumindest geringfügig größer als dessen Breite b definiert ist.

3. Drehrichtungsabhängig konfektionierter Scheibenbremsbelag (1) nach einem oder mehreren der vorhergehenden Ansprüche 1-2, **dadurch gekennzeichnet, dass** die beiden Fensterlaibungen (12,13) mittels einer im Wesentlichen eben, orthogonal zur Reibbelagmittelachse Y, ausgeprägten Fensterbasis (14) miteinander verbunden sind.

4. Drehrichtungsabhängig konfektionierter Scheibenbremsbelag (1) nach einem oder mehreren der vorhergehenden Ansprüche 1-3, **dadurch gekennzeichnet, dass** Fensterbasis (14) und Halbkreisrundbogen im Wesentlichen zueinander gegenüberliegend vorgesehen sind.

5. Drehrichtungsabhängig konfektionierter Scheibenbremsbelag (1) nach einem oder mehreren der vorhergehenden Ansprüche 1-4, **dadurch gekennzeichnet, dass** die Fensterbasis (14) im Wesentlichen orthogonal zu Fensterleibungen (12, 13) vorgesehen ist.

6. Drehrichtungsabhängig konfektionierter Scheibenbremsbelag (1) nach einem oder mehreren der vorhergehenden Ansprüche 1-5, **dadurch gekennzeichnet, dass** zwischen Fensterbasis (14) und jeder Fensterlaibung (12,13) jeweils ein Viertelkreisrandbogen mit einem definierten Radius eingefügt ist, und wobei ein Kreisradius der Viertelkreisrandbögen im Wesentlichen geringer bemessen ist, als die Hälfte des Haltebolzendurchmessers D.

7. Drehrichtungsabhängig konfektionierter Scheibenbremsbelag (1) nach Anspruch 6, **dadurch gekennzeichnet, dass** die beiden Viertelkreisrandbögen mit zueinander unterschiedlich bemessenen Radien, sowie zueinander gegenüberliegend ausgerichtet, ausgebildet sind.

8. Drehrichtungsabhängig konfektionierter Scheibenbremsbelag (1) nach Anspruch 6 oder 7, **dadurch gekennzeichnet, dass** ein einlaufseitig allokierter Viertelkreisrandbogen über einen größeren Radius verfügt, als ein auslaufseitig allokierter Viertelkreisrandbogen.

9. Drehrichtungsabhängig konfektionierter Scheibenbremsbelag (1) nach einem oder mehrere der vorhergehenden Ansprüche 1-8, **dadurch gekennzeichnet, dass** die Radien der Viertelkreisrandbögen jeweils für sich genommen kleiner als der Radius des Halbkreisrundbogens bemessen sind.

10. Drehrichtungsabhängig konfektionierter Scheibenbremsbelag (1) nach Anspruch 9, **dadurch gekennzeichnet, dass** die Radien der beiden Viertelkreisrandbögen in Summe gerechnet inetwa mit dem Radius des überspannenden Halbkreisrundbogens übereinstimmen.

11. Drehrichtungsabhängig konfektionierter Scheibenbremsbelag (1) nach einem oder mehrere der vorhergehenden Ansprüche 6-10, **dadurch gekennzeichnet, dass** ein Radius eines Viertelkreisrandbogens im Vergleich zum Radius des Halbkreisrundbogens inetwa 20 % - 80 % kleiner bemessen ist.

12. Drehrichtungsabhängig konfektionierter Scheibenbremsbelag (1) nach einem oder mehrere der vorhergehenden Ansprüche 1-11, **dadurch gekennzeichnet, dass** die randoffene Maulöffnung (10) durch zwei im Wesentlichen zueinander parallel aus gerichtet angeordnete Maulflächen (15,16) definiert ist.

13. Drehrichtungsabhängig konfektionierter Scheibenbremsbelag (1) nach einem oder mehrere der vorhergehenden Ansprüche 1-12, **dadurch gekennzeichnet, dass** die Maulflächen (15,16) in der Rückenplatte (2) mit einem Anstellwinkel α zwischen etwa 0° - ± 45° ausgebildet sind.

14. Drehrichtungsabhängig konfektionierter Scheibenbremsbelag (1) nach Anspruch 15, **dadurch gekennzeichnet, dass** der Anstellwinkel α einer bevorzugten Ausführungsform insbesondere α = 0 oder α = + 15° beträgt.

15. Drehrichtungsabhängig konfektionierter Scheibenbremsbelag (1) nach einem oder mehrere der vorhergehenden Ansprüche 1-14, **dadurch gekennzeichnet, dass** das Loch (9) und/oder die Maulöffnung (10) auf einer Rückseite (17) der Rückenplatte (2) jeweils mit einer umlaufend halbkreisförmig abgerundeten Kante mit Radius R von etwa 1 mm, oder alternativ mit einer gebrochenen Kante mittels eine Fase von etwa 1 × 30 °, oder mit wechselweise ausgeprägten Mischformen der vorstehenden Gestaltungen ausgebildet sind.

16. Drehrichtungsabhängig konfektionierter Scheibenbremsbelag (1) nach einem oder mehreren der vorhergehenden Ansprüche 1-15, **gekennzeichnet durch** eine einseitig fixe Reibbelaghalterung in Tangentialrichtung T, umfassend einen einseitig platzierten Haltebolzen (18), mit Verzicht auf einen Anlagewechsel, und eine einseitig zugeordnete Haltebolzenaufnahme, und wobei die gebildete Toleranzkette ausschließlich definiert ist **durch** Addition bzw. Substraktion von zwei Nennmaßen einschließlich deren oberem und unterem Abmaß im Bereich der unmittelbar festlagerseitig am A-Festlager beteiligten Maße, nämlich zwischen a) Haltebolzendurchmesser D (inclusive dessen jeweiliger Abmaßtoleranzen ΔD) und b) Bolzenaufnahmeöffnung d in der Rückenplatte 1 (inclusive deren jeweiliger Abmaßtoleranzen Δd), nach der Formel

$$\Delta d \pm d + \Delta D \pm D = \Delta S \pm S.$$

17. Drehrichtungsabhängig konfektionierter Scheibenbremsbelag (1) nach Anspruch 16, **dadurch gekennzeichnet, dass** die Toleranzkette in der Lagerung verkürzt ist, indem auf rechnerischen Einbezug eines Bolzenabstandes (Distanz L) verzichtet wird.

18. Drehrichtungsabhängig konfektionierter Scheibenbremsbelag (1) nach einem oder mehreren der vorhergehenden Ansprüche, **dadurch gekennzeichnet, dass** eine konstruktiv formschlüssige Codierung zur Vermeidung einer drohenden Reibbelagfehlmontage definiert ist, indem beispielsweise das Loch (9) und die Maulöffnung (10) in der Rückenplatte (2) über wechselweise unterschiedlich gestaltete oder identisch dimensionierte Durchmesser ausgebildet sind, und wobei die korrekt zu paarenden Haltebolzen (18) und Führungsbolzen (19) ihrerseits dazu eineindeutig passende, also identische oder unterschiedlich dimensionierte, Durchmesser aufweisen, oder dass den querversetzt ausgeprägten Lagerflanken (7,8) der Rückenplatte (2) ganz besondere individuell maßgeschneidert passende Aufnahmeöffnungen im Festsattelscheibenbremsgehäuse (5) zugeordnet sind, so dass durch diese formschlüssig codierten Mittel ausschließlich eine korrekte Montagepaarung ermöglichst ist.

19. Drehrichtungsabhängig konfektionierter Scheibenbremsbelag (1) nach einem oder mehreren der vorhergehenden Ansprüche, **gekennzeichnet durch** eine Rückenplatte (2) die seitlich diametral, distal, ausgerichtete sowie in Radialrichtung R zueinander querversetzt arrangierte Lagerflanken (7,8) mit zwei ganz unterschiedlich ausgeformten Bolzenaufnahmeöffnungen verfügt.

20. Drehrichtungsabhängig konfektionierter Scheibenbremsbelag (1) nach einem oder mehreren der vorhergehenden Ansprüche 1-19, **dadurch gekennzeichnet, dass** die Lagerflanken (7,8) und/oder Bolzenaufnahmeöffnungen mit maximaler Distanz L zueinander versetzt an der Rückenplatte (2) vorgesehen sind.

21. Drehrichtungsabhängig konfektionierter Scheibenbremsbelag (1) nach einem oder mehreren der vorhergehenden Ansprüche 1-20, **dadurch gekennzeichnet, dass** ein Loch (9) vorgesehen ist, das aus einem Dreiviertelkreisrundbogen und einem Viertelkreisrandbogen zusammengesetzt ist.

22. Festsattelkraftfahrzeugteilbelagscheibenbremse umfassend mindestens einen Scheibenbremsbelag (1) nach einem der vorigen Ansprüchen und ein Festsattelscheibenbremsgehäuse (5) zur drehfesten Lagerung und zur parallelverschiebbaren Führung von wenigstens zwei, entlang einer Kolbenachse K relativverschiebbar angeordneten, sowie jeweils kolbenbetätigten Scheibenbremsbelägen (1), die beidseits zu einander sowie parallel zu Reibflächen einer rotierenden Bremsscheibe (4) arrangiert sind, **gekennzeichnet durch** eine per fixem Festlager A jeweils ortsfest einlaufseitig, bezogen auf eine Vorzugsdrehrichtung V +, definierte Bremskrafteinleitung in das Festsattelscheibenbremsgehäuse (5), und umfassend ein fix platziertes Reibbelagloslager B, das nach den Merkmalen von einem oder mehreren der vorhergehenden Patentansprüchen 1-21, mit Bezug auf die Vorzugsdrehrichtung V + auslaufseitig platziert angeordnet ist.

23. Scheibenbremsbelagersatzteilsatz, umfassend zumindest zwei im Wesentlichen spiegelsymmetrisch zueinander ausgeführte, drehrichtungsabhängig konfektionierte Scheibenbremsbeläge (1) nach einem oder mehreren der vorhergehenden Patentansprüche 1-21, **gekennzeichnet durch** die Verwendung zur Neuherstellung, Instandsetzung und/oder Wartung, wie insbesondere Reparatur, einer Festsattelkraftfahrzeugteilbelagscheibenbremse nach den Merkmalen des Patentanspruches 22.

**Claims**

1. Disc brake lining (1) which is assembled depending on the direction of rotation, with a backing plate (2) as a carrier for a friction material (3), for the purpose of cooperation with a rotatable brake disc (4) that is surrounded by a rotationally fixedly mounted fixed caliper disc brake housing (5), and for mounting the disc brake lining (1), wherein the backing plate (2) is cut from a strip-like flat sheet steel material so as to be asymmetric with respect to a friction lining central axis (Y), the friction material (3) is fixed largely centrally and indirectly or directly on a front side (6) of the backing plate (2), and with distal bearing flanks (7, 8) arranged transversely offset and designed to be free from friction material, wherein the bearing flank (7) placed on the inlet side in the preferred direction of rotation (V+) is transversely offset radially inwardly in relation to a piston axis K, and has a holder with a hole (9) for receiving a retaining pin in order to define a fixedly positioned friction lining fixed bearing A, and wherein the allocated bearing flank (8) of the backing plate (2) which is placed on the outlet side and which is radially outwardly transversely offset is equipped with a twist prevention device in the form of a mouth opening (10) which is designed open at the edges and which has a receiving pocket (11) as a guide pin receiver so as to define a fixedly positioned friction lining floating bearing B, **characterized in that** the hole (9) is formed as a partially circular window with defined height h and defined width h, and the partially circular window substantially has a semicircular arc which, with a predefined nominal radius R, spans two window reveals (12, 13) which are oriented substantially parallel to each other and parallel to the friction lining central axis Y.

2. Disc brake lining (1) which is assembled depending on the direction of rotation according to Claim 1, **characterized in that** in order to form a slot structure oriented parallel to the friction lining central axis Y, the height h of the partially circular window is defined as at least slightly larger than its width b.

3. Disc brake lining (1) which is assembled depending on the direction of rotation according to one or more of the preceding Claims 1-2, **characterized in that** the two window reveals (12, 13) are connected together by a window base (14) which is substantially flat and orthogonal to the friction lining central axis Y.

4. Disc brake lining (1) which is assembled depending on the direction of rotation according to one or more of the preceding Claims 1-3, **characterized in that** the window base (14) and the semicircular arc are provided substantially opposite each other.

5. Disc brake lining (1) which is assembled depending on the direction of rotation according to one or more of the preceding Claims 1-4, **characterized in that** the window base (14) is provided substantially orthogonally to the window reveals (12, 13).

6. Disc brake lining (1) which is assembled depending on the direction of rotation according to one or more of the preceding Claims 1-5, **characterized in that** in each case a quarter-circular arc with a defined radius is interposed between the window base (14) and each window reveal (12, 13), and wherein a circle radius of the quarter-circular arc is dimensioned substantially smaller than half the retaining pin diameter D.

7. Disc brake lining (1) which is assembled depending on the direction of rotation according to Claim 6, **characterized in that** the two quarter-circular arcs are formed with differently dimensioned radii and oriented opposite each other.

8. Disc brake lining (1) which is assembled depending on the direction of rotation according to Claim 6 or 7, **characterized in that** an inlet-side allocated quarter-circular arc has a larger radius than an outlet-side allocated quarter-circular arc.

9. Disc brake lining (1) which is assembled depending on the direction of rotation according to one or more of the preceding Claims 1-8, **characterized in that** the radii of the quarter-circular arcs are each in themselves dimensioned smaller than the radius of the semicircular arc.

10. Disc brake lining (1) which is assembled depending on the direction of rotation according to Claim 9, **characterized in that** the radii of the two quarter-circular arcs added together correspond approximately to the radius of the spanning semicircular arc.

11. Disc brake lining (1) which is assembled depending on the direction of rotation according to one or more of the preceding Claims 6-10, **characterized in that** a radius of a quarter-circular arc is dimensioned around 20% - 80% smaller than the radius of the semicircular arc.

12. Disc brake lining (1) which is assembled depending on the direction of rotation according to one or more of the preceding Claims 1-11, **characterized in that** the open-edged mouth opening (10) is defined by two mouth faces (15, 16) which are oriented substantially parallel to each other.

13. Disc brake lining (1) which is assembled depending on the direction of rotation according to one or more of the preceding Claims 1-12, **characterized in that** the mouth faces (15, 16) in the backing plate (2) are formed with a pitch angle $\alpha$ of between around 0° - $\pm$ 45°.

14. Disc brake lining (1) which is assembled depending on the direction of rotation according to Claim 15, **characterized in that** the pitch angle $\alpha$ of a preferred embodiment is in particular $\alpha = 0$ or $\alpha = + 15°$.

15. Disc brake lining (1) which is assembled depending on the direction of rotation according to one or more of the preceding Claims 1-14, **characterized in that** the hole (9) and/or the mouth opening (10) is/are each formed on a back side (17) of the backing plate (2) with a peripheral semicircular rounded edge of radius R of approximately 1 mm, or alternatively with a broken edge by means of a chamfer of approximately 1 × 30°, or with alternately embodied mixed forms of the above-mentioned designs.

16. Disc brake lining (1) which is assembled depending on the direction of rotation according to one or more of the preceding Claims 1-15, **characterized by** a unilaterally fixed friction lining holder in the tangential direction T, comprising a unilaterally placed retaining pin (18), with omission of a contact position change, and a unilaterally assigned retaining pin receiver, and wherein the resulting tolerance chain is defined exclusively by addition or subtraction of two nominal dimensions, including their upper and lower deviations, in the range of the dimensions directly involved in the A fixed bearing on the fixed bearing side, namely between a) retaining pin diameter D (including its respective deviation tolerances $\Delta D$) and b) pin-receiving opening d in the backing plate 1 (including its respective deviation tolerances $\Delta d$), according to the formula

$$\Delta d \pm d + \Delta D \pm D = \Delta S \pm S.$$

17. Disc brake lining (1) which is assembled depending on the direction of rotation according to Claim 16, **characterized in that** the tolerance chain in the mounting is shortened **in that** there is no mathematical inclusion of a pin spacing (distance L).

18. Disc brake lining (1) which is assembled depending on the direction of rotation according to one or more of the preceding claims, **characterized in that** a form-fit coding by design is defined in order to avoid the possibility of incorrect mounting of the friction lining, **in that** for example the hole (9) and the mouth opening (10) in the backing plate (2) are formed via alternately differently designed or identically dimensioned diameters, and wherein the correctly paired retaining pin (18) and guide pin (19) themselves to this end have a uniquely fitting, i.e. identical or differently dimensioned, diameter, or that quite particularly individually customized, matching receiving openings in the fixed caliper disc brake housing (5) are assigned to the transversely offset bearing flanks (7, 8) of the backing plate (2), so that these form-fit coding means exclusively ensure a correct mounting pairing.

19. Disc brake lining (1) which is assembled depending on the direction of rotation according to one or more of the preceding claims, **characterized by** a backing plate (2) which has laterally diametrically and distally oriented bearing flanks (7, 8) arranged transversely offset to each other in the radial direction R, with two quite differently formed pin-receiving openings.

20. Disc brake lining (1) which is assembled depending on the direction of rotation according to one or more of the preceding Claims 1-19, **characterized in that** the bearing flanks (7, 8) and/or pin-receiving openings are provided on the backing plate (2) so as to be offset to each other by a maximum distance L.

21. Disc brake lining (1) which is assembled depending on the direction of rotation according to one or more of the preceding Claims 1-20, **characterized in that** a hole (9) is provided which is composed of a three-quarter-circular arc and a quarter-circular arc.

22. Fixed caliper part-lining disc brake for a motor vehicle, comprising at least one disc brake lining (1) according to one of the above claims and a fixed caliper disc brake housing (5) for rotationally fixed mounting and parallel movable guidance of at least two in each case piston-actuated disc brake linings (1), which are arranged so as to be movable relative to and along a piston axis K and which are arranged on both sides and parallel to friction surfaces of a rotating brake disc (4), **characterized by** an introduction of braking force into the fixed caliper disc brake housing (5) defined per fixem fixed bearing A, in each case stationarily on the inlet side relative to a preferred direction of rotation V+, and comprising a fixedly positioned friction lining floating bearing B which is placed on the outlet side with respect to the preferred direction of rotation V+, according to the features of one or more of the preceding Patent Claims 1-21.

23. Disc brake lining spare parts kit comprising at least two disc brake linings (1) which are designed substantially mirror-symmetrically relative to each other and assembled depending on the direction of rotation, according to one or more of the preceding Patent Claims 1-21, **characterized by** the use for new production, restoration and/or maintenance, such as in particular repair, of a fixed caliper part-lining disc brake for a motor vehicle according to the features of Patent Claim 22.

**Revendications**

1. Garniture de frein à disque (1) confectionnée en dépendance à la direction de rotation, comprenant une plaque arrière (2) en tant que support pour un matériau de friction (3), en vue d'une coopération avec un disque de frein rotatif (4) qui est entouré par un boîtier de frein à disque à étrier fixe (5) monté de manière immobile en rotation, et qui supporte la garniture de frein à disque (1), la plaque arrière (2) en un matériau en tôle d'acier plan en forme de bande étant séparée de manière asymétrique par rapport à un axe central de garniture de friction (Y), le matériau de friction (3) étant fixé de manière essentiellement centrale ainsi qu'indirectement ou directement sur un côté frontal (6) de la plaque arrière (2), et comprenant des flancs de palier (7, 8) distaux ainsi que disposés en décalage transversal, conçus sans matériau de friction, le flanc de palier (7) placé côté entrée dans la direction de rotation préférentielle (V+) étant décalé transversalement radialement vers l'intérieur par rapport à un axe de piston K, et disposant d'une fixation avec un trou (9) pour le logement d'un boulon de retenue, afin de définir un palier fixe à garniture de friction A placé de manière fixe, et le flanc de palier (8) de la plaque arrière (2), placé côté sortie et décalé transversalement radialement vers l'extérieur, étant équipé d'un blocage anti-rotation, qui est configuré sous la forme d'une ouverture de bouche (10) ouverte sur le bord avec une poche de logement (11) en tant logement pour un boulon de guidage, afin de définir un palier sans garniture de friction B placé de manière fixe, **caractérisée en ce que** le trou (9) est configuré sous la forme d'une fenêtre en arc de cercle d'une hauteur h définie et d'une largeur h définie, et la fenêtre en arc de cercle dispose essentiellement d'un arc de cercle en demi-cercle qui recouvre, avec un rayon nominal R défini prédéterminé, deux embrasures de fenêtre (12, 13) orientées essentiellement parallèlement l'une à l'autre ainsi que parallèlement à l'axe central de garniture de friction Y.

2. Garniture de frein à disque (1) confectionnée en dépendance à la direction de rotation selon la revendication 1, **caractérisée en ce que,** en vue de la formation d'une structure de trou oblong orientée parallèlement à l'axe central de garniture de friction Y, la hauteur h de la fenêtre en arc de cercle est définie comme étant au moins légèrement supérieure à sa largeur b.

3. Garniture de frein à disque (1) confectionnée en dépendance à la direction de rotation selon une ou plusieurs des revendications 1 à 2 précédentes, **caractérisée en ce que** les deux embrasures de fenêtre (12, 13) sont reliées entre elles au moyen d'une base de fenêtre (14) développée sous forme essentiellement plane, orthogonale à l'axe central de garniture de friction Y.

4. Garniture de frein à disque (1) confectionnée en dépendance à la direction de rotation selon une ou plusieurs des revendications 1 à 3 précédentes, **caractérisée en ce que** la base de fenêtre (14) et l'arc de cercle en demi-cercle sont prévus essentiellement en vis-à-vis l'un de l'autre.

5. Garniture de frein à disque (1) confectionnée en dépendance à la direction de rotation selon une ou plusieurs des revendications 1 à 4 précédentes, **caractérisée en ce que** la base de fenêtre (14) est prévue essentiellement orthogonale aux embrasures de fenêtre (12, 13).

6. Garniture de frein à disque (1) confectionnée en dépendance à la direction de rotation selon une ou plusieurs des revendications 1 à 5 précédentes, **caractérisée en ce qu'**entre la base de fenêtre (14) et chaque embrasure de fenêtre (12, 13) est inséré respectivement un arc de bord en quart de cercle ayant un rayon défini, et dans laquelle un rayon de cercle des arcs de bord en quart de cercle est dimensionné pour être essentiellement inférieur à la moitié du diamètre du boulon de retenue D.

7. Garniture de frein à disque (1) confectionnée en dépendance à la direction de rotation selon la revendication 6, **caractérisée en ce que** les deux arcs de bord en quart de cercle sont configurés avec des rayons dimensionnés différemment l'un de l'autre, ainsi qu'orientés à l'opposé l'un de l'autre.

8. Garniture de frein à disque (1) confectionnée en dépendance à la direction de rotation selon la revendication 6 ou 7, **caractérisée en ce qu'**un arc de bord en quart de cercle alloué au côté de l'entrée dispose d'un rayon supérieur à un arc de bord en quart de cercle alloué au côté de la sortie.

9. Garniture de frein à disque (1) confectionnée en dépendance à la direction de rotation selon une ou plusieurs des revendications 1 à 8 précédentes, **caractérisée en ce que** les rayons des arcs de bord en quart de cercle, chacun pris individuellement, sont dimensionnés pour être inférieurs au rayon de l'arc de cercle en demi-cercle.

10. Garniture de frein à disque (1) confectionnée en dépendance à la direction de rotation selon la revendication 9, **caractérisée en ce que** les rayons des deux arcs de bord en quart de cercle, calculés au total, coïncident approximativement avec le rayon de l'arc de cercle en demi-cercle qui les recouvre.

11. Garniture de frein à disque (1) confectionnée en dépendance à la direction de rotation selon une ou plusieurs des revendications 6 à 10 précédentes, **caractérisée en ce qu'**un rayon d'un arc de bord en quart de cercle est dimensionné pour être environ 20 % à 80 % inférieur au rayon de l'arc de cercle en demi-cercle.

12. Garniture de frein à disque (1) confectionnée en dépendance à la direction de rotation selon une ou plusieurs des revendications 1 à 11 précédentes, **caractérisée en ce que** l'ouverture de bouche (10) ouverte sur le bord est définie par deux surfaces de bouche (15, 16) agencées pour être orientées essentiellement parallèlement l'une à l'autre.

13. Garniture de frein à disque (1) confectionnée en dépendance à la direction de rotation selon une ou plusieurs des revendications 1 à 12 précédentes, **caractérisée en ce que** les surfaces de bouche (15, 16) sont formées dans la plaque arrière (2) avec un angle d'inclinaison $\alpha$ compris entre environ 0° et $\pm 45°$.

14. Garniture de frein à disque (1) confectionnée en dépendance à la direction de rotation selon la revendication 15, **caractérisée en ce que** l'angle d'inclination $\alpha$ d'un mode de réalisation préféré est notamment $\alpha = 0$ ou $\alpha = +15°$.

15. Garniture de frein à disque (1) confectionnée en dépendance à la direction de rotation selon une ou plusieurs des revendications 1 à 14 précédentes, **caractérisée en ce que** le trou (9) et/ou l'ouverture de bouche (10) sur un côté arrière (17) de la plaque arrière (2) sont configurés respectivement avec une arête arrondie périphérique en forme de demi-cercle ayant un rayon R d'environ 1 mm, ou en variante avec une arête brisée au moyen d'un chanfrein d'environ 1 x 30°, ou avec des formes mixtes des configurations précédentes développées en alternance.

16. Garniture de frein à disque (1) confectionnée en dépendance à la direction de rotation selon une ou plusieurs des revendications 1 à 15 précédentes, **caractérisée par** une fixation de garniture de friction fixe d'un côté dans la direction tangentielle T, comprenant un boulon de retenue (18) placé d'un côté, avec renonciation à un changement d'installation, et un logement de boulon de retenue associé d'un côté, et dans laquelle la chaîne de tolérance formée est définie exclusivement par l'addition ou la soustraction de deux dimensions nominales incluant leurs variations dimensionnelles supérieures et inférieures dans la plage des dimensions directement impliquées côté palier fixe dans le palier fixe A, à savoir entre a) le diamètre du boulon de retenue D (y compris ses tolérances de variation dimensionnelle respectives $\Delta D$) et b) l'ouverture de logement de boulon d dans la plaque arrière 1 (y compris ses tolérances de variation dimensionnelle respectives $\Delta d$), selon la formule

$$\Delta d \pm d + \Delta D \pm D = \Delta S \pm S.$$

**17.** Garniture de frein à disque (1) confectionnée en dépendance à la direction de rotation selon la revendication 16, **caractérisée en ce que** la chaîne de tolérance dans le montage est raccourcie en renonçant à la prise en compte par calcul d'une distance entre les boulons (distance L).

**18.** Garniture de frein à disque (1) confectionnée en dépendance à la direction de rotation selon une ou plusieurs des revendications précédentes, **caractérisée en ce qu'**un codage par complémentarité de forme de construction est défini pour éviter un risque de montage erroné de la garniture de friction, par exemple par le fait que le trou (9) et l'ouverture de bouche (10) dans la plaque arrière (2) sont configurés avec des diamètres conçus pour être réciproquement différents ou dimensionnés de manière identique, et dans laquelle les boulons de retenue (18) et les boulons de guidage (19) devant être correctement appariés présentent de leur côté des diamètres biunivoquement adaptés, c'est-à-dire identiques ou dimensionnés différemment, ou **en ce que** des ouvertures de logement tout particulièrement adaptées individuellement sur mesure dans le boîtier de frein à disque à étrier fixe (5) sont associées aux flancs de palier (7, 8) de la plaque arrière (2) développés en décalage transversal, de telle sorte qu'un appariement de montage correct est exclusivement possible grâce à ces moyens codés par complémentarité de forme.

**19.** Garniture de frein à disque (1) confectionnée en dépendance à la direction de rotation selon une ou plusieurs des revendications précédentes, **caractérisée par** une plaque arrière (2) qui joint des flancs de palier (7, 8) orientés latéralement de manière diamétralement distale et disposés en décalage transversal l'un par rapport à l'autre dans la direction radiale R, avec deux ouvertures de logement de boulon formées de manière tout à fait différente.

**20.** Garniture de frein à disque (1) confectionnée en dépendance à la direction de rotation selon une ou plusieurs des revendications 1 à 19 précédentes, **caractérisée en ce que** les flancs de palier (7, 8) et/ou les ouvertures de logement de boulon sont prévus sur la plaque arrière (2) en étant décalés les uns par rapport aux autres d'une distance maximale L.

**21.** Garniture de frein à disque (1) confectionnée en dépendance à la direction de rotation selon une ou plusieurs des revendications 1 à 20 précédentes, **caractérisée en ce qu'**un trou (9) est prévu, qui est composé d'un arc de cercle de trois quarts de cercle et d'un arc de bord d'un quart de cercle.

**22.** Frein à disque à garniture partielle à étrier fixe pour véhicule automobile, comprenant au moins une garniture de frein à disque (1) selon l'une quelconque des revendications précédentes et un boitier de frein à disque à étrier fixe (5) pour le montage immobile en rotation et pour le guidage en coulissement parallèle d'au moins deux garnitures de frein à disque (1) agencées en coulissement relatif le long d'un axe de piston K et actionnées chacune par un piston, qui sont disposées de part et d'autre l'une de l'autre ainsi que parallèlement à des surfaces de friction d'un disque de frein (4) en rotation, **caractérisé par** une introduction de force de freinage dans le boîtier de frein à disque à étrier fixe (5) définie respectivement de manière fixe du côté de l'entrée par rapport à une direction de rotation préférentielle V+ pour chaque palier fixe A, et comprenant un palier sans garniture de friction B placé de manière fixe, qui est agencé selon les caractéristiques d'une ou de plusieurs des revendications 1 à 21 précédentes, pour être placé du côté de la sortie par rapport à la direction de rotation préférentielle V+.

**23.** Jeu de pièces de rechange de garniture de frein à disque, comprenant au moins deux garnitures de frein à disque (1) réalisées pour être essentiellement symétriques l'une de l'autre, confectionnées en dépendance à la direction de rotation, selon une ou plusieurs des revendications 1 à 21 précédentes, **caractérisé par** l'utilisation pour la fabrication à neuf, la remise en état et/ou l'entretien, tel que notamment la réparation, d'un frein à disque à garniture partielle à étrier fixe pour véhicule automobile selon les caractéristiques de la revendication 22.

Fig. 1a

Fig. 1b

Fig. 2

## Fig. 3

| Muster | Federkraft (Einlauf A/D) / (Auslauf A/D) [N] | Frequenz [Hz] | | | | | |
|---|---|---|---|---|---|---|---|
| | | 10 | 20 | 30 | 40 | 50 | |
| | | Klappergrenze [g] | | | | | |
| 3-48112-777/778 | 17 / 16 / 20 / 20 | > 11 | > 20 | 18,5 | 14,0 | 13,0 | Halbkreis |
| 3-48112-775/776 | 17 / 16 / 20 / 20 | > 11 | > 20 | 20,0 | 19,0 | 12,0 | Halbkreis |
| Standard | 17 / 16 / 20 / 20 | 9,5 | 6,0 | 6,0 | 6,0 | 6,8 | Gerade |

EP 3 791 085 B1

**Fig. 4**

3   V- ←→ V+   1   2   8   11

α ≅ 0°

7

12

V

14   9   13   Y   K   17   VI

15   10   16

Rad

M — T

**Fig. 5**

7

R

h   17   13

12

14

b

**Fig. 6**

8   15

α ≅ 0°

11   17   10   16

16   E

R1,3

6   2   17

**Fig. 7**

3

V+

V-

8   15   10   16

17

6   11

1

7   2

9

Ax   R   T

EP 3 791 085 B1

**Fig. 8**

**Fig. 9**

**Fig. 10**

α ~ +15°

α ~ +15°

0,5 x 30°

**Fig. 11**

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005064188 A1